# EUROPEAN PATENT APPLICATION

(11) **EP 2 245 966 A2**
(43) Date of publication of application: **03.11.2010**
(21) Application number: 10004209.2
(22) Date of filing: 21.04.2010
(51) Int. Cl.: A47C 7/74, E04H 3/30, E04H 3/12, F24D 11/00

(54) **System for modulating the temperature of elements of the furniture of large facilities**

(30) Priority: 21.04.2009 ES 200901143
(71) Applicant: SAPJE, S.L., 26002 Logroño La Rioja (ES)
(72) Inventor: Ferrer Ruiz, Diego, 26006 Logroño (La Rioja) (ES)
(74) Representative: Villamor Muguerza, Jon

(57) **Abstract**

The invention relates to a system for modulating the temperature of elements of the furniture of large facilities, said system comprising an inter-accumulator (1) which a temperature-modulated fluid coming from a secondary circuit (2 or 2') enters, said temperature-modulated fluid being obtained by means of the use of renewable, alternative and/or conventional energies, the temperature-modulated fluid being distributed from the inter-accumulator (1), through a secondary circuit (9), towards radiation circuits (10) by means of a recirculation pump (11) and with a thermostatic mixing valve (12) in order to adjust the pre-established temperature, these radiation circuits (10) being able to be arranged in elements of furniture, such as the grandstands of a sports facility, conference halls, etc. The primary capture circuit (2) of the temperature-modulated fluid includes a geothermal exchanger (5) for dissipating excess heat and for cold input.

## Description

### Object of the Invention

The present invention relates to a system for modulating the temperature of elements of the furniture of large facilities, such as sports facilities, facilities for shows, stadiums, conference halls, sports centers, etc., both outdoors and in enclosed areas, and based on the use of renewable, alternative and/or conventional energies.

The object of the invention is to minimize the enormous consumption for modulating the temperature of the large volumes of air in facilities that are either open or in enclosed areas, thereby minimizing the consumption of resources, since the system not only heats or cools elements or areas, but rather modulates their temperature according to the occupation needs.

### Background of the Invention

Currently in certain facilities of the type mentioned above, the grandstands occupied by spectators serve to meet only their basic function and often lack any intrinsic design, which is difficult to understand. In such sense, the inventor is unaware of systems that can modulate the temperature of grandstands or large facilities, whether they are enclosed, semi-enclosed or outdoors.

Therefore the inventor, motivated by the lack of modern practical and implemented technique of any type of temperature-modulated and furthermore autonomous grandstands, has designed a system which is an innovation in relation to the classic conventional heating and cooling systems for grandstands, which are typically based on fans, radiators, etc., which, in addition to the enormous consumption, are not practical when the facilities are large.

### Description of the Invention

The proposed system for modulating the temperature, which can be applied in many facilities, is a system for modulating the temperature which allows modulating the temperature only in the area of use and not in the entire environment, whereby the power consumption can be reduced about 20 fold or more, even being able to specify the temperature modulation by sectors or levels, not affecting the acclimatization of the rest of the facility, for example it does not affect the athletes, which involves a drastic reduction of the power consumption in acclimatization, without the well-being suffering as a result, but rather it even enhances the use and enjoyment of the facilities.

Based on the use of capturing energy by external means, such as solar energy, geothermal energy, wind energy, water energy, etc., the system is based on modulating the temperature of a fluid, or a mixture of fluids, with a high freezing point and with high heat transfer, using to that end two circuits and a common inter-accumulator, one of the circuits of which is primary and circulating therethrough is the temperature-modulated fluid which comes from a clean energy source, such as the energy obtained by solar panels or the like, whereas the other circuit is a secondary circuit and circulating therethrough is the temperature-modulated fluid for its distribution through a series of circuits arranged in the places or elements of the furniture of the facility the temperature of which is to be modulated.

The primary or capture circuit receives the temperature-modulated fluid from an energy source, such as solar heat panels, or from a geothermal system with a heat pump, such that in any case the system will be complemented with a geothermal exchanger for dissipating the excess heat and for cold input, the temperature-modulated fluid reaching the inter-accumulator, after which there is arranged the secondary or emitting circuit for this temperature-modulated fluid for its distribution through the radiation circuits thereof, all with the support of recirculation pumps, thermostatic mixing valves, relief valve of the circuit, etc.

Therefore, and in accordance with the existence of several means for capturing energies referred to as renewable energies, clean energies, etc., the system has been designed as a mixed system in order to be able to be used both in winter and in summer, the energy being captured by means of solar panels complemented with a geothermal exchanger, according to what has been discussed above, such that the system is not only provided for heating elements of the furniture of a facility, such as the grandstands for the spectators, but also for modulating the temperature thereof and keeping it constant either by providing heat to or removing heat from the emitting element or secondary circuit.

It has furthermore been provided that the fluids of the primary circuit and of the secondary circuit coexist simultaneously in the accumulator without mixing together, and each is in its corresponding circuit.

It should also be pointed out that the primary and secondary circuits, i.e., the circuits for the temperature-modulated fluid are one-pipe circuits made of a material with a high transfer capacity, also being able to be dual-pipe circuits, including in either case insulation protection means attached to the circuits for distributing fluid, i.e., the secondary circuit, in those areas or places in which temperature modulation is not necessary or not required.

### Description of the Drawings

To complement the description that will be provided below and for the purpose of aiding to better understand the features of the invention according to a preferred practical embodiment thereof, a set of illustrative and non-limiting drawings is attached to said description in which the following has been depicted:
Figure 1 shows the diagram corresponding to the system of the invention with a geothermal exchanger and heat pump.
Figure 2 shows a view similar to that of the previous figure, but in this case with solar panels as the means for capturing energy, with the complement of a geothermal exchanger for dissipating the excess heat and for cold input.
Figure 3 shows a schematic perspective view of a practical application of the system of the invention, specifically in grandstands of a sports facility or the like, in which armrests have been provided in the different grandstands as separators for the spectators.
Figure 4 shows an enlarged depiction of the circuit for distributing the temperature-modulated fluid, showing in said figure how there are arranged radiating chambers through which the mentioned fluid circulates from an inlet branch to a return branch, and in which said chambers are complemented with a relief valve.

### Preferred Embodiment of the Invention

As can be seen in the mentioned figures, the system of the invention comprises an inter-accumulator (1), connected by one part to a primary circuit (2 or 2'), for a temperature-modulated fluid which is duly heated by means of an energy source, for example based on solar heat panels (3), or based on a geothermal exchanger (4) with a heat pump, such that in the first case, i.e., in the primary circuit (2) of the solar panels (3), a geothermal exchanger (5) is also included for dissipating excess heat.

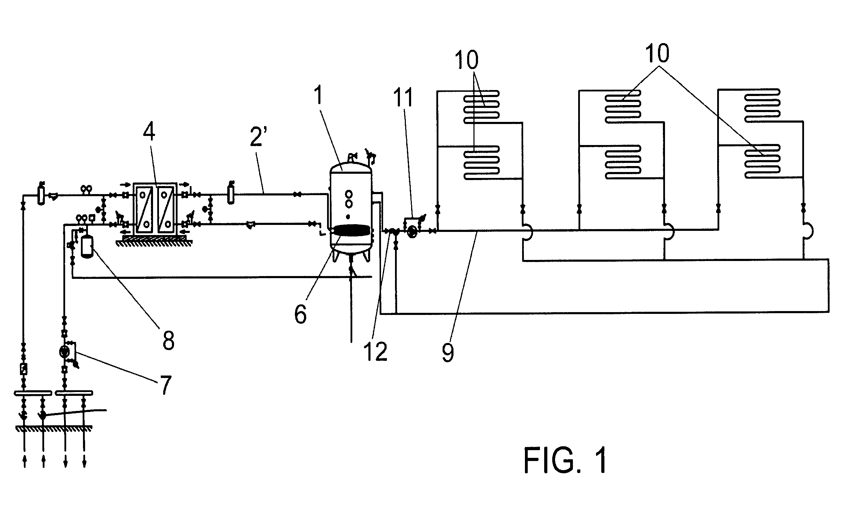

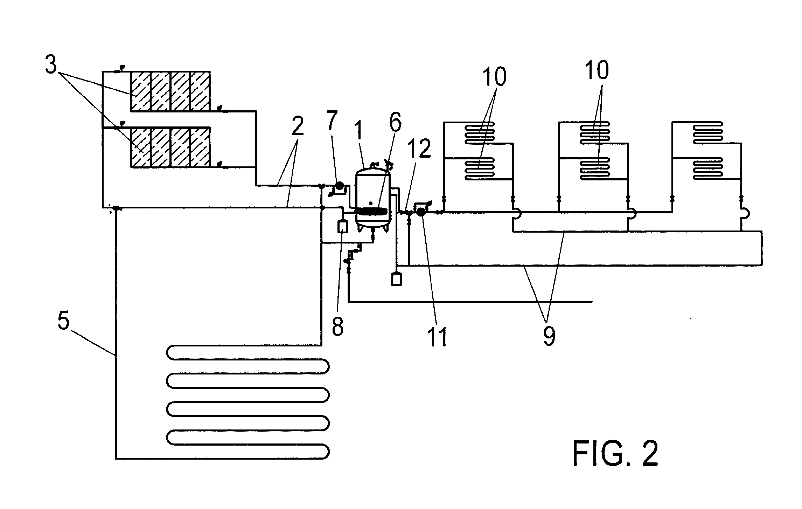

In the inter-accumulator (1) there is a bed of fluid (6), it having been provided that in both the primary circuit (2) and in the primary circuit (2') there is a recirculation pump (7). The bed of fluid (6) is associated with an expansion vessel (8), as can clearly be seen in Figures 1 and 2.

The temperature-modulated fluid which comes from the primary circuit (2 or 2') and heated using any of the previously mentioned energies reaches the inter-accumulator (1) and from there, it is received through a secondary circuit (9) towards corresponding radiation circuits (10) installed, for example, in the grandstands of a facility, the distribution being performed by means of a recirculation pump (11) and a thermostatic mixing valve (12).

In other words, by means of the recirculation pump (11) the temperature-modulated fluid circulates through the secondary circuit (9) continuously by means of the propulsion produced by the recirculation pump (11), with a pre-established temperature that is achieved by means of the thermostatic mixing valve (12) since it mixes the fluids having different temperatures so that the circuit is always at the pre-established temperature.

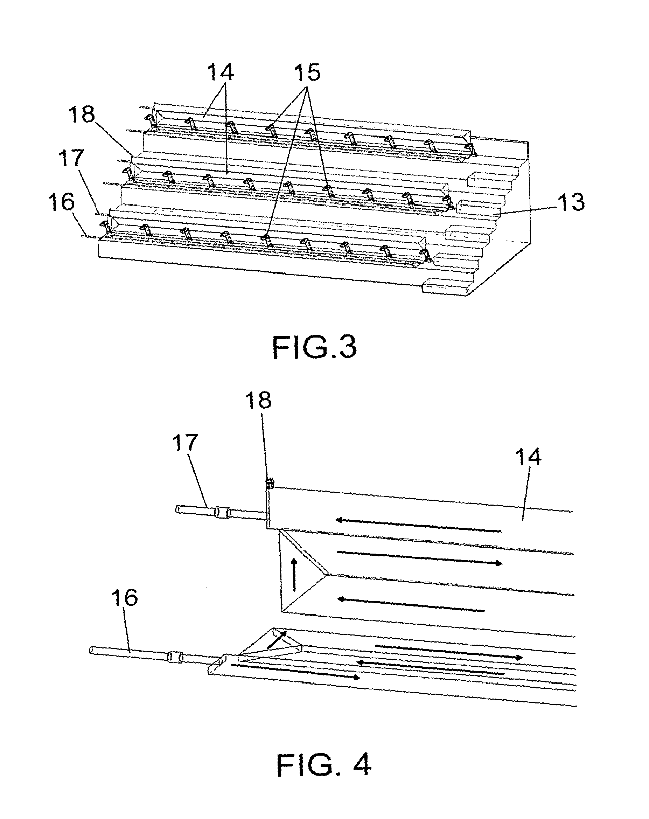

In the practical application in a grandstand (13), as depicted in Figure 3, and in which corresponding continuous radiating chambers (14) have been provided, with armrests (15) or another separating element or distinction of the spectators occupying said grandstands, for each of the radiating chambers (14), there is an inlet conduit (16) and another return conduit (17), logically corresponding to the secondary circuit (9), there being in each radiating chamber (14) a relief valve (18), Figure 4 showing the path of the temperature-modulated fluid through the radiating chambers (14).

To avoid unnecessary losses and therefore increase the yield of the system, energy losses can be avoided by protecting and insulating those areas the temperature modulation of which makes no sense or is not desired.

By means of the described system the temperature of a fluid is modulated, either heating it or cooling it, in order to recirculate it through the radiation circuits (10) and thus transmit the heating or cooling capacity to the place or element of furniture in which these radiation circuits (10) are located and make the user or spectator of the facility feel comfortable, and all this with maximum efficiency and minimum consumption, the system being simple, easy to implement and handle, with minimum maintenance and complete self-sufficiency.

It must finally be stated that the system of the invention solves the emissions problem dealt with in the Kyoto Protocol, without losing effectiveness with regard to the temperature modulation of the furniture elements, in this case the grandstands (13), of a facility.

## Claims

1. A system for modulating the temperature of elements of the furniture of large facilities, such as sports facilities, facilities for shows, stadiums, conference halls, sports centers and the like, both outdoors and in enclosed areas, and based on the use of renewable, alternative and/or conventional energies, **characterized in that** it comprises an inter-accumulator (1) receiver of a temperature-modulated fluid which comes from a primary capture circuit (2 or 2') for capturing renewable, alternative and/or conventional energy, from which inter-accumulator (1) there is derived a secondary emitting circuit (9) for circulating the temperature-modulated fluid and distributing it over elements of furniture (13) the temperature of which is to be modulated of the facility, this distribution being performed by means of radiation circuits (10) arranged for that purpose in the elements (13) the temperature of which is to be modulated.

2. The system for modulating the temperature of elements of the furniture of large facilities, according to claim 1, **characterized in that** the primary capture circuit (2, 2') and secondary or emitting circuit (9) define an exchange of the energy levels in the inter-accumulator (1) for accumulating the desired energy.

3. The system for modulating the temperature of elements of the furniture of large facilities according to claim 1, **characterized in that** the primary or capture circuit (2') incorporates a geothermal energy means and heat pump (4).

4. The system for modulating the temperature of elements of the furniture of large facilities according to claim 1, **characterized in that** means (3) for capturing energy that can be transformed into heat have been provided in the primary capture circuit (2) along with cooling means (5) formed by a geothermal exchanger for dissipating heat and for supplying to the inter-accumulator (1) heating or cooling energy, as needed, for modulating the temperature of the fluid.

5. The system for modulating the temperature of elements of the furniture of large facilities according to claim 1, **characterized in that** the secondary or emitting circuit (9) is a circuit for recirculating the fluid, controlled by one or several thermostatic regulating valves (12), this circuit including a recirculation pump (11).

6. The system for modulating the temperature of elements of the furniture of large facilities according to claims 1 and 2, **characterized in that** the fluid of the primary or emitting circuit (2 or 2) and of the secondary or capture circuit (9) coexist separately and without mixing together in the inter-accumulator (1).

7. The system for modulating the temperature of elements of the furniture of large facilities according to claim 1, **characterized in that** the radiation circuits (10) for radiating the temperature-modulated fluid are one-pipe circuits made of a material with a high transfer capacity.

8. The system for modulating the temperature of elements of the furniture of large facilities according to claim 1, **characterized in that** the radiation circuits (10) of the temperature-modulated fluid are dual-pipe circuits made of a material with a high transfer capacity.

9. The system for modulating the temperature of elements of the furniture of large facilities according to claims 7 and 8, **characterized in that** insulation protections have been provided in the radiation circuits (10) attached thereto in those areas or places in which temperature modulation is not necessary or not required.
